**Europäisches Patentamt**

**European Patent Office**

**Office européen des brevets**

(19)

(11) Veröffentlichungsnummer: **0 229 909**
**B1**

(12) **EUROPÄISCHE PATENTSCHRIFT**

(45) Veröffentlichungstag der Patentschrift:
**20.09.89**

(51) Int. Cl.⁴: **B23B 41/02**

(21) Anmeldenummer: 86115625.5

(22) Anmeldetag: **11.11.86**

(54) **Tiefbohrmaschine.**

(30) Priorität: **15.01.86 DE 3600967**

(43) Veröffentlichungstag der Anmeldung:
**29.07.87 Patentblatt 87/31**

(45) Bekanntmachung des Hinweises auf die Patenterteilung:
**20.09.89 Patentblatt 89/38**

(84) Benannte Vertragsstaaten:
**AT BE CH FR GB IT LI LU NL SE**

(56) Entgegenhaltungen:
**DE-A- 3 316 283**
**DE-A- 3 427 212**

(73) Patentinhaber: **TBT Tiefbohrtechnik GmbH,
Siemensstrasse 1, D-7433 Dettingen/Erms(DE)**

(72) Erfinder: **Schmid, Wolfgang, Corneliusstrasse 21,
D-7433 Dettingen(DE)**

(74) Vertreter: **Dreiss, Hosenthien & Fuhlendorf,
Gerokstrasse 6, D-7000 Stuttgart 1(DE)**

## Beschreibung

Die Erfindung betrifft eine Teifbohrmaschine mit einer drehantreibbaren und ein Tiefbohrwerkzeug aufnehmenden Tiefbohreinheit zur Bearbeitung eines Werkstückes, bei der das vordere Ende des Tiefbohrwerkzeugs bei Beginn des Bohrvorgangs in einer Bohrbuchse geführt ist, die in einer Arbeitsspindel auswechselbar aufgenommen ist, und bei der die Arbeitsspindel durch einen vom Antrieb der Teifbohreinheit unabhängigen weiteren Antrieb ebenfalls drehantreibbar ist.

Eine derartige Tiefbohrmaschine ist aus der DE-A 3 316 283 bekannt. Bei dieser ist vorgesehen, daß zusätzlich zum Antrieb der Tiefbohreinheit auch das Werkstück angetrieben werden kann. Zu diesem Zweck ist die das Werkstück bildende Welle in einer drehbar gelagert und in einer von einem unabhängigen Antrieb angetriebenen hohlen Arbeitsspindel aufgenommen und in dieser gespannt. Dabei ist vorgesehen, daß der Bohrbuchsenträger an einem zu der Antriebsspindel gehörenden Rohrstück fest angebracht ist. Der Bohrbuchsenträger einschl. der von ihm gehaltenen Bohrbuchse dreht sich also mit dem Werkstück mit. Dabei ist im allgemeinen vorgesehen, daß nicht das Tiefbohrwerkzeug, sondern lediglich das Werkstück angetrieben wird; es wird jedoch auch in Betracht gezogen, das Tiefbohrwerkzeug selbst in eine langsame gegenläufige Drehung zu versetzen. Eine andere Arbeitsweise als die des Tiefbohrens ist mit dieser Tiefbohrmaschine nicht möglich.

Aufgabe der Erfindung ist es, eine Tiefbohrmaschine der ganannten Art zu so weiterzubilden, daß nicht nur – unter Verwendung eines Tiefbohrwerkzeugs – tiefgebohrt werden kann, sondern daß ferner an demselben Werkstück durch Einsatz anderer Werkzeuge zusätzliche Bearbeitungsgänge durchgeführt werden können. Das bedeutet also, daß mit derselben Maschine und ggf. bei derselben Aufspannung des Werkstückes außer dem Tiefbohren noch normale Bohrvorgänge, Entgraten, Gewindeschneiden, Fräsen etc. möglich ist, wobei die dazu erforderlichen zusätzlichen Einrichtungen möglichst einfach und ohne Verlust an Präzision, wie sie bei einer Tiefbohrmaschine gegeben sein muß, aufgebaut sein sollen.

Diese Aufgabe wird erfindungsgemäß dadurch gelöst, daß der Antrieb die Arbeitsspindel gegenüber dem Werkstück in Drehung versetzt, und daß die Arbeitsspindel gegenüber dem Werkstück in Vorschubrichtung verschiebbar ist.

Dies bedeutet, daß – im Vergleich zu der oben diskutierten DE-A 3 316 283 – die Arbeitsspindel und der ihr zugeordnete Antrieb in ihrer Drehbewegung nicht – unter Mitnahme der Bohrbuchse – zur Drehung des Werkstückes bestimmt, sondern vielmehr zur Drehung eines Werkzeuges gegenüber dem Werkstück und zur Erreichung einer Vorschubbewegung, ebenfalls gegenüber dem Werkstück, eingerichtet sind. Im Gegensatz zu dem oben diskutierten Stand der Technik ist also die Arbeitsspindel und ihr Antrieb von der Aufspannung bzw. Aufnahme des Werkstücks unabhängig.

Somit kann in die Aufnahme (Spannzange, Spannkonus od. dgl.) der Arbeitsspindel wahlweise eine Bohrbuchse oder andere Werkzeuge aufgenommen werden. Wird die Bohrbuchse bzw. ein Spannkörper mit einer Bohrbuchse aufgenommen und die Arbeitsspindel festgestellt (entweder selbst oder durch Feststellung des sie antreibenden Antriebs), dann arbeitet die Tiefbohrmaschine beim Tiefbohren in der herkömmlichen Art und Weise. Wechselt man die Tiefbohreinheit aus gegen eine Werkzeugeinheit mit einem anderen Werkzeug (Bohrer, Senker, Fräser, Gewindeschneider, usw.) und treibt die Arbeitsspindel mit Hilfe des getrennten weiteren Antrieb an, dann kann man die Tiefbohrung, aber auch schon dasselbe Werkstück vor dem Anbringen der Tiefbohrung, mit den anderen Werkzeugen bearbeiten. Der Vorschub der Arbeitsspindel, mit dem dann eingesetzte Werkzeuge auf das Werkstück hin, der ja beim Tiefbohren nicht erforderlich ist, kann alternativ auf zwei Arten verwirklicht werden. Entweder man verwendet dazu den bei Tiefbohrmaschinen an sich bereits vorhandenen Anlegeschlitten, der normalerweise dazu dient, die Bohrbuchsen an das Werkstück anzulegen. Oder man bildet die Arbeitsspindel als in Vorschubrichtung mit entsprechenden hydraulischen Mitteln zum Zwecke des Vorschubs verschiebbare Pinole aus, wobei die Antriebseinheit für die Antriebsspindel mit verschiebbar ausgebildet ist.

Ausführungsbeispiele der Erfindung und ihrer vorteilhaften Weiterbildungen werden im folgenden unter Bezugnahme auf die beigefugten Zeichnungen beschrieben. Es stellen dar:

Figur 1 ein Ausführungsbeispiel;
Figur 1a ein Teil eines Tiefbohrwerkzeuges;
Figur 2 eine Bohrbuchseneinheit und drei Werkzeugeinheiten;
Figur 3 ein zweites Ausführungsbeispiel.

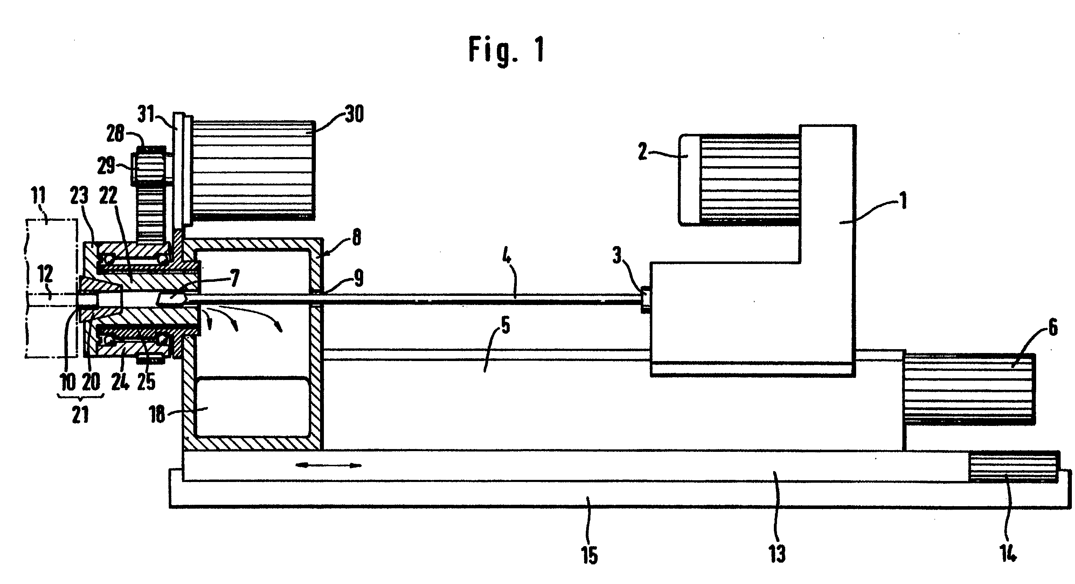

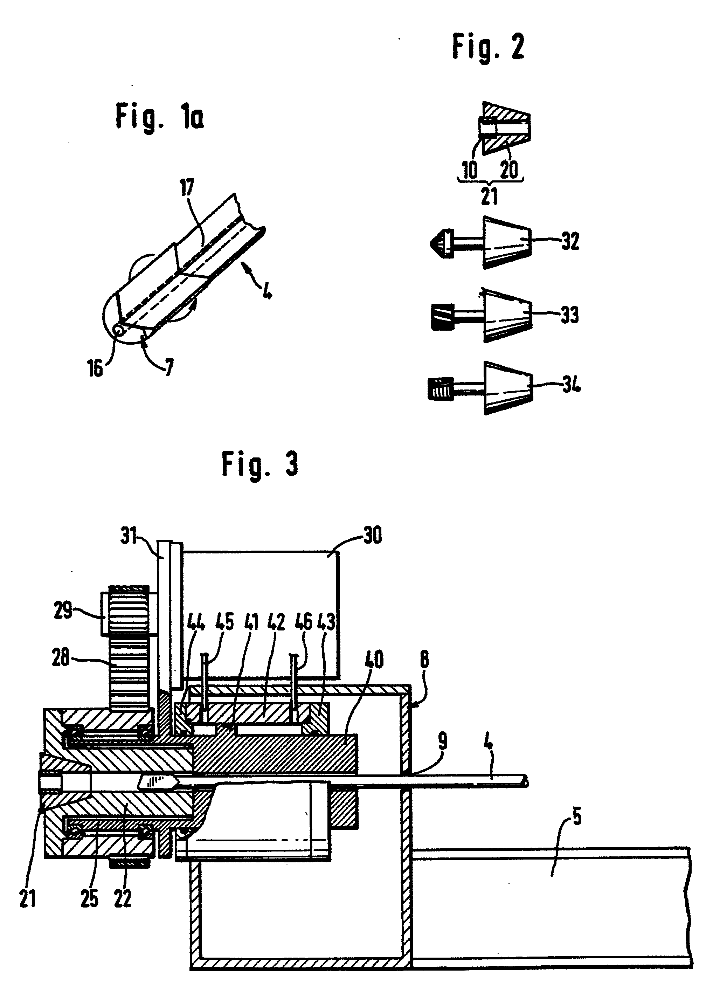

Die in Fig. 1 gezeigte Tiefbohrmaschine weist eine Tiefbohrmaschine 1, mit einem Antriebsmotor 2 auf. Durch den Antriebsmotor 2 wird eine Spindel 3, die in der Tiefbohreinheit 1 drehbar aufgenommen ist und mit Werkzeug-Spanneinrichtungen versehen ist, angetrieben. Die Spindel 3 nimmt ein Tiefbohrwerkzeug 4, im vorliegenden Fall einen Einlippenbohrer, auf. Die Tiefbohreinheit 1 ist auf einem Vorschuschlitten 5 in Bohrichtung verschiebbar. Die Verschiebung erfolgt mittels des Antriebsmotors 6. Das vordere Ende des Tiefbohrwerkzeugs 4 erstreckt sich in den Bohrbuchsenträger 8 hinein, der im Ausführungsbeispiel im wesentlichen durch ein kastenartiges Gehäuse gebildet wird, das an der Stelle des Durchtritts des Tiefbohrwerkzeuges 4 mit einer Öffnung 9 versehen ist. Der Bohrkopf 7 am vorderen Ende des Tiefbohrwerkzeuges 4 wird beim Bohren in einer Bohrbuchse 10 geführt. Diese Bohrbuchse 10 wird gegeben ein Werkstück 11, in das eine Bohrung 12 gebohrt werden soll, angelegt. Dies erfolgt dadurch, daß der Bohrbuchsenträger 8 auf einem Anlegeschlitten 13 angeordnet ist, der mittels eines Antriebsmotors 14 im Maschinenbett 15 verschiebbar ist. Das vordere Ende des Tiefbohrwerkzeuges 4 ist in Fig. 1a dargestellt. Daraus ist ersichtlich, daß ein derartiges Tiefbohrwerkzeug (sog. Einlippenbohrer) mit einem Innenkanal 16 versehen ist und entlang seines Umfang eine im Prinzip V-förmige Nut 17 aufweist. Durch den Innenkanal 16 wird während des Bohrvorganges Spül- und Schmierflüssigkeit zugeführt. Die Abfuhr des Spül- und Schmierflüssigkeit zusammen mit den Spänen erfolgt dann über die Nut 17. Der Ablauf innerhalb des kastenförmigen Gehäuses des Bohrbuchsenträgers 8 ist mit Pfeilen angedeutet. Der Auslauf erfolgt durch die Offnung 18 im Bohrbuchsenträger 8. Soweit die Tiefbohrmaschine bis jetzt beschrieben worden ist, ist sie bekannt.

Die Bohrbuchse 10 ist nun in einem Spannkörper 20 angeordnet. Die dadurch gebildete Bohrbuchseneinheit 21 ist auswechselbar in einer Arbeitsspindel 22 aufgenommen, die am Bohrbuchsenträger 8 drehbar angeordet ist. Im Ausführungsbeispiel erfolgt die drehbare Anordnung dadurch, daß Arbeitsspindel 22 einen Flansch 23 aufweist, mit dem eine Antreibshülse 24 fest verbunden ist. Die Antriebshülse 24 ist auf der Nabe 25 mittels Lager drehbar gelagert. Die Nabe 25 ist fest mit dem Bohrbuchsenträger 8 verbunden.

Die Antriebhülse 24 ist über einen Zahnriemen 28 mit der Antriebswelle 29 eines Antriebsmotors 30 verbunden. Die Anordnung des Antriebsmotors 30 erfolgt auf einer Platte 31, die integral mit der Nabe 25 ausgebildet und somit ebenfalls am Bohrbuchsenträger 8 fest angeordnet ist.

Bei dem oben beschriebenen Vorgang des Tiefbohrens wird der Antriebsmotor 30 durch motorinterne Mittel oder anderswie festgelegt, so daß über den Zahnriemen 28 auch die Arbeitsspindel 22 festgelegt ist. Dann arbeitet die Tiefbohrmaschine normal, d.h. bei entsprechendem Vorschub der Tiefbohreinheit 1 in Richtung auf das Werkstück 11 wird - zunächst beim Anbohren - der Bohrkopf 7 in der Bohrbuchse 10 geführt. Der weitere Vorgang in das Werkstück 11 hin erfolgt dann ebenfalls in bekannter Weise, wobei das Tiebohrwerkzeug 4 durch die Bohrbuchse 10 sich hindurch erstreckt.

Die neue vorteilhafte Besonderheit der beschriebenen Anordnung besteht jedoch darin, daß bei nachfolgenden Bearbeitungsvorgängen desselben Werkstücks die Bohrbuchseneinheit 21 gegen andere Werkzeugeinheiten 32 bis 34, die beispielhaft in Fig. 2 dargestellt sind, ausgewechselt werden kann. Dann wird die Arbeitsspindel 22 von dem Antriebsmotor 30 angetrieben. Wie auf Fig. 2 ersichtlich kann, z.B. die Werkzeugeinheit 32 mit einem Senker, die Werkzeugeinheit 33 mit einem Fräser (zum Planfräsen der die Bohrung 12 umgebenen Fläche) und die Werkzeugeinheit 34 mit einem Gewindeschneidwerkzeug versehen sein.

Der Vorteil einer solchen Vorrichtung besteht darin, daß auf diese Weise mit derselben Maschine und bei derselben Lage des Werkstücks 11 vor oder nach dem Tiefbohren weitere Bearbeitungsvorgänge vorgenommen werden können, wenn nur die entsprechende Werkzeugeinheit (bspw. 32 bis 34) gegen die Bohrbuchseneinheit 21 mit Bohrbuchse 10 ausgewechselt wird. Beim Arbeiten mit einer der Werkzeugeinheiten 32 bis 34 erfolgt der Vorschub durch den Anlegeschlitten 13. Für wird - falls mit fester Anordnung des Tisches, auf dem das Werkzeug 11 aufgespannt ist, gearbeitet wird - aus der in Fig. 1 gezeigten Stellung nach rechts zurückgefahren. Dann erfolgt das Auswechseln, d.h. die Bohrbuchseneinheit 21 wird herausgenommen und eine Werkzeugeinheit 32 bis 34 eingesetzt. Dann erfolgt der Vorschub auf die Bohrung 12 hin durch Verschiebung des Anlegeschlittens 13 nach links (Fig. 1).

Ein weiteres Ausführungsbiepsiel der Erfindung ist in Fig. 3 dargestellt. Es unterscheidet sich prinzipiell von dem Ausführungsbeispiel nach Fig. 1 in der Art und Weise des Vorschubs der Arbeitsspindel, in die auswechselbar eine Bohrbuchseneinheit 21 oder eine der Werkzeugeinheit 32 bis 34 einsetzbar ist. Im Ausführungsbeispiel 3 ist die Arbeitsspindel 22 wiederum in einer Nabe 25 gelagert. Diese Nabe 25 ist integraler Teil der Pinole 40, die mit einem Flansch 41 versehen ist. Die Pinole 40 mit Flansch 41 ist in einem Zylinder 42 angeordnet. Der Zylinder ist zu seinen beiden Seiten mit Zylinderdeckeln 43 bzw. 44 versehen. Die Abdichtung der Pinole 40 gegenüber den Öffnungen in den Zylinderdeckeln bzw. die Abdichtung des Flansches 41 gegenüber der Innenfläche des Zylinders 42 erfolgt, wie aus Fig. 3 ersichtlich, durch entsprechende Dichtungen. Über Hydraulikanschlüsse 45, 46 werden die Räume rechts bzw. links des Flansches 41 zwischen Zylinder 42 und Pinole 40 mit unter Druck stehender hydraulischer Flüssigkeit beaufschlagt, so daß entsprechend eine Bewegung nach links oder nach rechts der Pinole und mit ihr der an ihr drehbar gelagerten Antriebsspindel 22 erfolgt. Antriebsmotor 30, Antriebswelle 29 und Zahnriemen 28 verschieben sich dabei mit, da deren Anordnung an der Platte 31 erfolgt, die - in Abweichung vom Ausführungsbeispiel nach Fig. 1 - nicht mehr stationär angeordnet ist, sondern sich mit der Pinole 40 verschiebt.

Die Aufnahme der Bohrbuchseneinheit 21 bzw. der Werkzeugeinheiten 32 bis 34 sind in beiden Ausführungsbeispielen bspw. als Konus dargestellt. Die Aufnahme kann selbstverständlich in jeder Art und Weise erfolgen, wie sie für Werkzeugaufnahmen bekannt ist, also über Steilkegel, Spannzangen, zylindrische Aufnahmen, usw. Das ist dem Fachmann geläufig und braucht deshalb an dieser Stelle nicht weiter ausgeführt werden.

Hinzuweisen ist insbesondere noch auf die Tatsache, daß beim Auswechseln der Bohrbuchseneinheit 21 gegen eine der Werkzeugeinheiten 32, 33 oder 34 keine neue Zentrierung der Achse der Arbeitsspindel 22 auf die Bohrung 12 erforderlich ist. Es erfolgt vielmehr lediglich eine Bewegung der Arbeitsspindel 22 in Richtung ihrer Achse nach rückwärts durch entsprechendes Zurückfahren des Anlegeschlittens 13 (in Fig. 1) oder Zurückfahren der Pinole 40 (Fig. 3). Nach Auswechseln der Bohrbuchseneinheit gegen eine Werkzeugeinheit erfolgt dann dieselbe Bewegung wieder nach vorne, ohne daß eine erneute Ausrichtung der Arbeitsspindel auf die Bohrung erforderlich ist. Die Arbeitsspindel verbleibt vielmehr immer genau auf die Bohrung einerseits und andererseits auf die Achse der Spindel 3 ausgerichtet. Dies ergibt eine außerordentlich hohe Genauigkeit der verschiedenen aufeinander folgenden Bearbeitungsgänge bei gleichzeitig hoher Zeitersparnis.

Es ergibt sich aus der vorangegangenen Beschreibung der Arbeitsweise auch, daß während der Bearbeitung des Werkstücks mit den Werkzeugeinheiten 33 usw. das Tiefbohrwerkzeug 4 nicht ausgebaut oder ausgewechselt werden muß. Auch diese Tatsache ist gegenüber Anordnungen, bei denen auf derselben Spindel in dieselbe Einspanneinrichtung nacheinander verschiedene Werkzeuge aufgenommen werden, ein erheblicher Vorteil.

**Patentansprüche**

1. Tiefbohrmaschine mit einer drehantreibbaren und ein Tiefbohrwerkzeug (4, 7) aufnehmenden Tiefbohreinheit (1) zur Bearbeitung eines Werkstückes (11), bei der das vordere Ende (7) des Tiefbohrwerkzeugs (4) bei Beginn des Bohrvorgangs in einer Bohrbuchse (10) geführt ist, die in einer Arbeitsspindel auswechselbar aufgenommen ist, und bei der die Arbeitsspindel durch einen vom Antrieb (2) der Tiefbohreinheit (1) unabhängigen weiteren Antrieb (30) ebenfalls drehantreibbar ist, dadurch gekennzeichnet, daß der Antrieb (30) die Arbeitsspindel (22) gegenüber dem Werkstück (12) in Drehung versetzt, und daß die Arbeitsspindel (22) gegenüber dem Werkstück (12) in Vorschubrichtung verschiebbar ist.

2. Tiefbohrmaschine nach Anspruch 1, bei der die Bohrbuchse (10) in einem Bohrbuchsenträger (8) angeordnet ist, durch den sich das Tiefbohrwerkzeug (4) hindurch erstreckt, dadurch gekennzeichnet, daß die Arbeitsspindel (22) drehbar auf einer Nabe (25) gelagert ist, die am Bohrbuchsenträger (8) fest angeordnet ist, daß bei Aufnahme einer Werkzeugeinheit (32, 33, 34) in der Arbeitsspindel (22) die Vorschubbewegung des Bohrbuchsenträgers (8) mit der Arbeitsspindel (22) durch einen Vorschub des Anlegeschlittens (13) erfolgt, mit dem der Bohrbuchsenträger (8) auf das Werkstück (11) zu bewegbar ist.

3. Tiefbohrmaschine nach Anspruch 1, dadurch gekennzeichnet, daß die Arbeitsspindel (22) an einer Nabe (25) gelagert ist, und daß bei Aufnahme einer Werkzeugeinheit (32, 33, 34) in der Arbeitsspindel (22) die Vorschubbewegung dadurch erfolgt, daß die Nabe (25) in axialer Richtung verschiebbar angeordnet ist und die Antriebseinheit (28 - 30) zum Drehantrieb der Arbeitsspindel (22) trägt.

4. Tiefbohrmaschine nach Anspruch 3, dadurch gekennzeichnet, daß die Nabe (25) mit einer Pinole (40) fest verbunden ist, die in einem Zylinder (42) verschiebbar ist, wobei der Zylinder an der Tiefbohrmaschine fest angeordnet ist.

5. Tiefbohrmaschine nach Anspruch 2 oder einem der folgenden, dadurch gekennzeichnet, daß der Antrieb für die Arbeitsspindel durch einen Antriebsmotor (30) erfolgt, der auf einer mit der Nabe (25) verbundenen Platte (31) angeordnet ist.

6. Tiefbohrmaschine nach Anspruch 1 oder einem der folgenden, dadurch gekennzeichnet, daß die Arbeitsspindel (22) einen Flansch (23) aufweist, der mit einer Antriebshülse (24) verbunden ist, wobei die Antriebshülse (24) über die Nabe (25) beschoben und dazwischen Lager angebracht sind, und daß der Antrieb von der Antriebswelle (29) des Antriebsmotors (30) mittels eines Riemens (28) erfolgt.

7. Tiefbohrmaschine nach Anspruch 1, dadurch gekennzeichnet, daß die Bohrbuchse (10) in einem Spannkörper (20) aufgenommen ist, daß der Spannkörper (20) als Konus, Steilkegel, Spannzange oder zylindrische Aufnahme in an sich bekannter Weise ausgebildet.

8. Tiefbohrmaschine nach Anspruch 1 oder einem der folgenden, dadurch gekennzeichnet, daß die Arbeitsspindel (22) in Drehrichtung feststellbar ist.

**Claims**

1. A deep boring machine comprising a deep boring unit (1) which can be driven in rotation and which accommodates a deep boring tool (4, 7) for machining a workpiece (11), in which the front end (7) of the deep boring tool (4) is guided at the beginning of the boring operation in a boring bush (10) which is replaceably accommodated in a working spindle and in which the working spindle can also be driven in rotation by a further drive (30) which is independent of the drive (2) of the deep boring unit (1) characterised in that the drive (30) rotates the working spindle (22) with respect to the workpiece (12) and that the working spindle (22) is displaceable in the feed direction relative to the workpiece (12).

2. A deep boring machine according to claim 1 wherein the boring bush (10) is arranged in a boring bush carrier (8) through which the deep boring tool (4) extends characterised in that the working spindle (22) is mounted rotatably on a hub (25) which is arranged fixedly at the boring bush carrier (8), that when a tool unit (32, 33, 34) is received in the working spindle (22) the feed movement of the boring bush carrier (8) with the working spindle (22) is effected by a feed movement of the feed slide (13) with which the boring bush carrier (8) is movable towards the workpiece (11).

3. A deep boring machine according to claim 1 characterised in that the working spindle (22) is mounted on a hub (25) and that when a tool unit (32, 33, 34) is received in the working spindle (22) the feed movement is produced by the hub (25) being arranged slidably in the axial direction and carrying the drive unit (28–30) for rotary driving of the working spindle (22).

4. A deep boring machine according to claim 3 characterised in that the hub (25) is fixedly connected to a tail spindle (40) which is displaceable in a cylinder (42), wherein the cylinder is fixedly arranged on the deep boring machine.

5. A deep boring machine according to claim 2 or one of the following claims characterised in that the drive for the working spindle is produced by a drive motor (30) which is arranged on a plate (31) connected to the hub (25).

6. A deep boring machine according to claim 1 or one of the following claims characterised in that the working spindle (22) has a flange (23) which is connected to a drive sleeve (24), wherein the drive sleeve (24) is pushed over the hub (25) and bearings are disposed therebetween, and that the drive from the drive shaft (29) of the drive motor (30) is by means of a belt (28).

7. A deep boring machine according to claim 1 characterised in that the boring bush (10) is accommodated in a clamping member (20), and that the clamping member (20) is in the form of a cone, a steep-angle taper member, a collet or cylindrical mounting member in per se known manner.

8. A deep boring machine according to claim 1 or one of the following claims characterised in that the working spindle (22) can be fixed in respect of its direction of rotary movement.

## Revendications

1. Machine d'alésage pour trous profonds avec un ensemble d'alésage profond (1) recevant un outil d'alésage pour trous profons (4, 7), pour l'usinage d'une pièce (11), dans laquelle l'extrêmité avant (7) de l'outil d'alésage pour trous profonds (4) est introduite, au début de l'operation d'alésage, dans une douille d'alésage (10) qui est portée par une broche de manière interchangeable, et dans laquelle la broche est également entrainable en rotation par l'intermédiaire d'un moteur (30) indépendant du moteur (2) de l'ensemble d'alésage profond (1), caractérisée en ce que le moteur (30) met en rotation la broche (22) par rapport a la pièce (12), et que la broche (22) est déplaçable par rapport à la pièce (12) dans le sens de l'avancement.

2. Machine d'alésage pour trous profonds selon la revendication 1, dans laquelle la douille d'alésage (10) est montée dans un support (8) pour douille d'alésage, à travers lequel s'étend l'outil d'alésage pour trous profonds (4), caractérisée en ce que la broche (22) est monté en rotation sur un moyeu (25) qui est monté fixe sur le support (8) pour douille d'alésage, qu'en recevant un ensemble d'outils (32, 33, 34) dans la broche (22), le déplacement vers l'avant du support (8) pour douille d'alésage avec la broche (22) s'effectue par un avancement du chariot d'étalement (13), avec lequel le support (8) pour douille d'alésage est mobile sur la pièce (11).

3. Machine d'alésage pour trous profonds selon la revendication 1, caractérisée en ce que la broche (22) est monté sur un moyeu (25), et qu'en montant un ensemble d'outils (32, 33, 34) dans la broche (22), le déplacement vers l'avant s'effectue par le fait que le moyeu (25) est monté de manière déplaçable dans le sens axial, et que l'ensemble de moteurs (28–30) porte la broche (22) pour l'entrainer en rotation.

4. Machine d'alésage pour trous profonds selon la revendication 3, caractérisée en ce que le moyeu (25) est fermement relié à une broche (40) qui est déplaçable à l'intérieur d'un cylindre (42), le cylindre àtant monté fixe sur la machine d'alésage pour trous profonds.

5. Machine d'alésage pour trous profonds selon la revendication 1, ou l'une des suivantes, caractérisée en ce que l'entrainement de la broche s'effectue à l'aide d'un moteur (30) qui est monté sur une plaque (31) reliée au moyeu (25).

6. Machine d'alésage pour trous profonds selon la revendication 1, ou l'une des suivantes, caractérisée en ce que la broche (22) présente une bride (23), qui est reliée à une douille d'entrainement (24), la douille d'entrainement (24) étant déplacée sur le moyeu (25) et qu'un palier est disposé entre eux, et que l'entrainement par l'arbre (29) du moteur (30) s'effectue par l'intermédiaire d'une courroie (28).

7. Machine d'alésage pour trous profonds selon la revendication 1, caracatérisée en ce que la douille d'alésage (10) est montée dans un corps de serrage (20), que le corps de serrage (20) est conçu sous forme de cône, de cône à angle obtus, de pince de serrage, ou de récepteur cylindrique, de manière connue en soi.

8. Machine d'alésage pour trous profonds selon la revendication 1, ou l'une des suivantes, caractérisée en ce que la broche (22) peut être bloquée dans le sens de la rotation.

Fig. 1

EP 0 229 909 B1

**Fig. 1a**

**Fig. 2**

**Fig. 3**